(19) Europäisches Patentamt
European Patent Office
Office européen des brevets

(11) Publication number: 0 369 289 A1

# (12) EUROPEAN PATENT APPLICATION

(21) Application number: 89120564.3

(22) Date of filing: 07.11.89

(51) Int. Cl.5: C25D 13/02, C25D 13/10, C25D 9/04, B01F 17/00, B01F 17/18, C07F 17/02

(30) Priority: 14.11.88 JP 285753/88

(43) Date of publication of application: 23.05.90 Bulletin 90/21

(84) Designated Contracting States: BE CH DE FR GB IT LI NL SE

(71) Applicant: IDEMITSU KOSAN COMPANY LIMITED
1-1, Marunouchi 3-chome Chiyoda-ku
Tokyo 100(JP)

(72) Inventor: Yokoyama, Seiichiro Idemitsu Kosan Co., Ltd.
1280, Kamiizumi Sodegaura-machi
Kimitsu-gun Chiba-ken(JP)

(74) Representative: Türk, Gille, Hrabal
Brucknerstrasse 20
D-4000 Düsseldorf 13(DE)

## (54) Process for producing inorganic thin films.

(57) A process for producing inorganic thin films which comprises dissolving or dispersing inorganic substances in an aqueous medium by the use of a micelle forming agent or a surfactant comprising a ferrocene derivative, and then electrolyzing the resulting micelle solution or dispersion to form a thin film of said inorganic substance on the electrode is disclosed.

According to the process, inorganic thin film can be formed with a simple operation.

FIG. 1

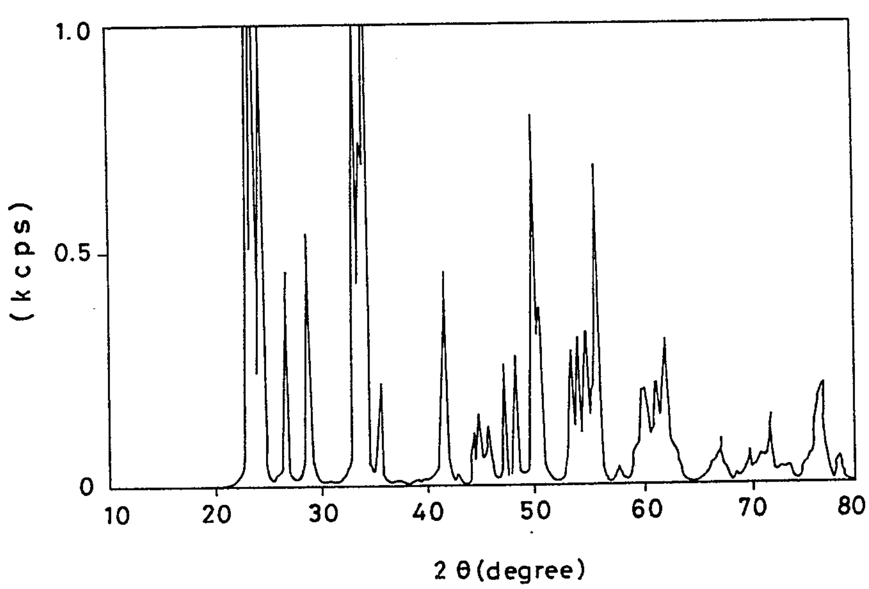


EP 0 369 289 A1

# PROCESS FOR PRODUCING INORGANIC THIN FILMS

## BACKGROUND OF THE INVENTION

### 1. Field of the Invention

The present invention relates to a process for producing inorganic thin films, and more particularly to a process for efficiently producing inorganic thin films which are applicable as electronic material, coating material and the like, by employing an electrochemical means as well as a specific micelle forming agent or a surfactant.

### 2. Description of the Related Arts

For producing various kinds of inorganic thin films, there have heretofore been known the vacuum deposition method, the heat CVD method, the plasma CVD method, the ultra-high vacuum (ion beam, molecular beam epitaxy) method, the LB membrane method and the casting method.

These methods, particularly the vacuum deposition method and the CVD method, however, have the disadvantage in that they require vacuum system as well as large-scale devices. In the casting method, selection of solvents meets difficulties, and inorganic materials which can be formed into thin films are limited.

## SUMMARY OF THE INVENTION

An object of the present invention is to provide a process for efficiently forming inorganic thin films with a simple operation.

Another object of the present invention is to provide a process for efficiently formin inorganic substances into thin films with a simple device and a simple operation.

In the course of study to accomplish the above object, the present inventors have found that the use of ferrocene derivatives as micelle forming agent or surfactant enables various inorganic substances to be taken into the micelle in the resulting solution or dispersion, and that the desired inorganic thin films are formed on an electrode by electrolyzing said micelle. The present invention has been accomplished based on the above findings.

The present invention provides a process for producing inorganic thin films by dissolving or dispersing inorganic substances in an aqueous solution with the use of a micelle forming agent or a surfactant comprising ferrocene derivatives, and then electrolyzing the resulting micelle solution or dispersion to form a thin film of the above inorganic substance on an electrode.

## BRIEF DESCRIPTION OF THE DRAWINGS

Fig. 1 is a X-ray diffraction pattern of $WO_3$ used in Example 1.
Fig. 2 is a X-ray diffraction pattern of the thin film obtained in Example 1.
Fig. 3 is a X-ray diffraction pattern of $TiO_2$ used in Example 2.
Fig. 4 is a X-ray diffraction pattern of the thin film obtained in Example 2.
Fig. 5 is a X-ray diffraction pattern of $Y_2O_3$-$ZrO_2$ used in Example 3.
Fig. 6 is a X-ray diffraction pattern of the thin film obtained in Example 3.
Fig. 7 is a X-ray diffraction pattern of CdS used in Example 4.
Fig. 8 is a X-ray diffraction pattern of the thin film obtained in example 4.
Fig. 9 is a X-ray diffraction pattern of $\alpha$-$Al_2O_3$ used in Example 5.
Fig. 10 is a X-ray diffraction pattern of the thin film obtained in Example 5.
Fig. 11 is s X-ray diffraction pattern of $SrCeO_3$ used in Example 6.
Fig. 12 is a X-ray diffraction pattern of the thin film obtained in Example 6.
In these Figures, $\theta$ is Bragg angle.

## DESCRIPTION OF PREFERRED EMBODIMENTS

The process of the present invention proceeds according to the following theory, to form inorganic thin films on an electrode (anode). Into an aqueous medium with controlled electrical conductance by adding a supporting electrolyte to water at need, a micelle forming agent (or a surfactant) comprising a ferrocene derivative and particles of inorganic substance are added and thoroughly dispersed by stirring, to form a micelle in which said inorganic substance is incorporated. When these micelles are subjected to electrclytic treatment, the micelles are attracted to the anode and the ferrocene derivative loses an electron $e^-$ on the anode ($Fe^{2+}$ in the ferrocene is oxidized to $Fe^{3+}$), which is accompanied by disruption of the micelle and the inorganic substance inside it is deposited on the anode, to form a thin film. On the other hand, the oxidized ferrocene derivative is drawn to the cathode to accept the electron $e^-$ to form a micelle again.

In the course of repeating such formation and disruption of micelle, particles of the inorganic substance are deposited on the anode to become a thin film, and thus the desired inorganic thin film is formed.

The micelle forming agent to be used in the present invention comprises a ferrocene derivative. Herein the ferrocene derivatives include various kinds, but representative ones are six kinds of following (1) to (6).

An example of such ferrocene derivatives is (1) ferrocene derivatives in which a ferrocene compound (ferrocene or ferrocene derivative having a suitable substituent (an alkyl group, an acetyl group and the like)) is bonded to a cationic surfactant of the ammonium type (preferably the quaternary ammonium type) having a main chain having 4 to 16 carbon atoms (preferably 8 to 14). If the number of carbon atoms in the main chain is too small, no micelle is formed, and if it is too large, the resulting ferrocene derivatives are not soluble in water.

The ferrocene compound is bonded to the surfactant in various manners. In one of the main embodiments, the ferrocene compound is bonded to the terminal of the main chain of the surfactant. In another embodiment, the ferrocene compound is bonded to an intermediate point of the main chain, directly or through an alkyl group. In still another embodiment, the ferrocene compound is incorporated in the main chain.

Ferrocene derivatives of this ammonium type are represented by the general formula:

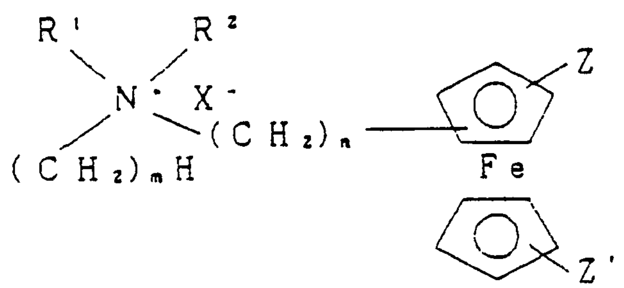

(wherein $R^1$ and $R^2$ are each a hydrogen or an alkyl group having 1 to 4 carbon atoms (provided that the number of carbon atoms does not exceed the integer m described later), Z and Z′ are each a hydrogen or a substituent (a methyl group, an ethyl group, a methoxyl group or a carbomethoxyl group), X is a halogen, and m and n are integers satisfying the requirements: $m \geq 0$, $n \geq 0$, and $4 \leq m + n \leq 16$), the general formula:

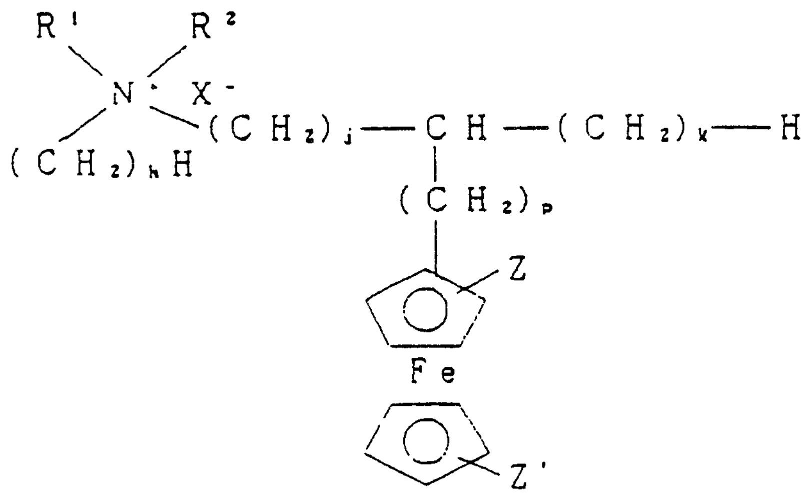

(wherein $R^1$, $R^2$, X, Z and Z′ are as defined above (provided that the number of carbon atoms of $R^1$ and $R^2$ does not exceed the integer h described later), h, j and k are integers satisfying the requirements: $h \geqq 0$, $j \geqq 0$, $k \geqq 1$ and $3 \leqq h + j + k \leqq 15$, and p is an integer satisfying the requirement: $0 \leqq p \leqq k-1$),
the general formula:

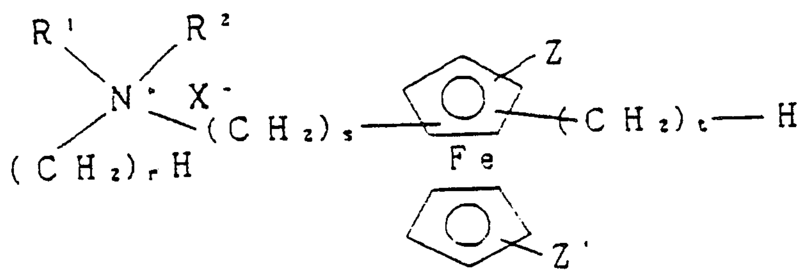

(wherein $R^1$, $R^2$, X, Y, Z and Z′ are as defined above (provided that the number of carbon atoms of $R^1$ and $R^2$ does not exceed the integer r described later), and r,s and t are integers satisfying the requirements: $r \geqq 0$, $s \geqq 0$, $t \geqq 1$ and $4 \leqq r + s + t \leqq 16$),
or the general formula:

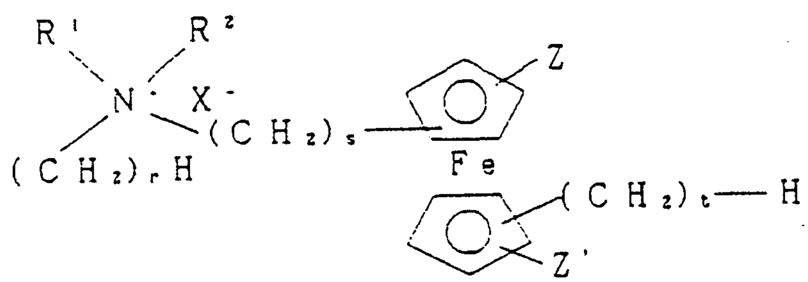

(wherein $R^1$, $R^2$, X, Y, Z, Z′, r, s and t are as defined above.)

Another type of ferrocene derivatives (2) is those of ether type represented by the general formula:

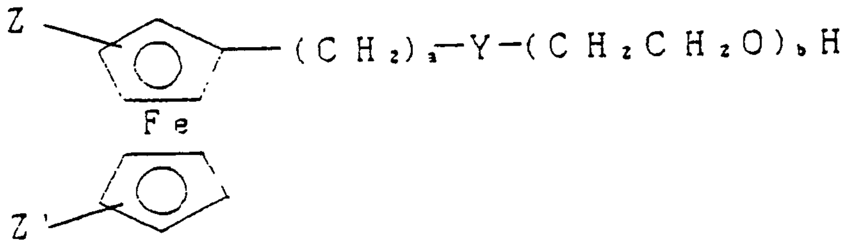

wherein a is an integer of 2 to 18, and b is a real number of 2.0 to 100.0. Since a is an integer of 2 to 18, as described above, an alkylene group having 2 to 18 carbons such as an ethylene group and a propylene group lies between the ring-member carbon atoms and Y. b indicates not only an integer of 2.0 to 100.0 but also a real number in the same range, which indicates the mean value of the repeating number of oxyethylene group ($-CH_2CH_2O-$) constituting the ferrocene derivatives. Further, Y in the above general formula represents an oxygen (-O-), an oxycarbonyl group ($-O-\underset{\underset{O}{\|}}{C}-$) or a carboxyl group ($-\underset{\underset{O}{\|}}{C}-O-$), and Z and Z′ indicate each a hydrogen or a substituent.

These ferrocene derivatives of ether type can be produced according to the process described in the specification of International Publication No. WO89/01939.

Another type of ferrocene derivatives (3) is those of pyridinium type represented by the general formula:

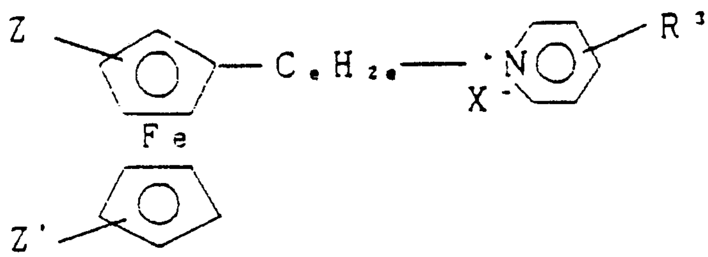

wherein Z, Z′ and X are as defined above, $R^3$ indicates an alkyl group having 1 to 4 carbon atoms, an alkoxyl group having 1 to 4 carbon atoms, a carboalkoxyl group having 1 to 5 carbon atoms, a hydroxyl group, a carboxyl group or a sulfonic acid group, and $C_eH_{2e}$ indicates a straight chain or a branched chain alkylene group having 1 to 16 carbon atoms. Specific examples of $C_eH_{2e}$ are straight chain alkylene groups including polymethylene groups $(CH_2)_e$ such as a tetramethylene group, a pentamethylene group, an octamethylene group, an undecamethylene group, a dodecamethylene group and a hexadecamethylene group; or branched chain alkylene groups such as a 2-methyl undecamethylene group and a 4-ethyl undecamethylene group.

These ferrocene derivatives of pyridinium type can be produced, for example, according to the process described in Japanese Patent Kokai No. 226894/1989.

Another type of ferrocene derivatives (4) are those represented by the general formula:

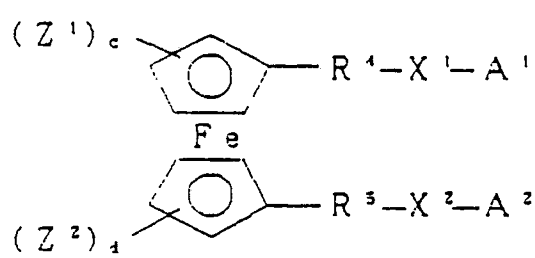

(wherein $R^4$ and $R^5$ are each a straight chain or a branched chain alkylene group having 1 to 14 carbon atoms, and $X^1$ and $X^2$ are each -O- or $-\underset{\underset{O}{\|}}{C}-O-$.

$A^1$ and $A^2$ are each

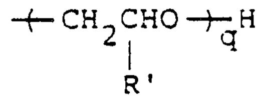

($R'$ is a hydrogen atom or a methyl group, and q is a real number of 2 to 70), $Z^1$ and $Z^2$ are each a hydrogen atom, a methyl group, a methoxyl group, an amino group, a dimethylamino group, a hydroxyl group, an acetylamino group, a carboxyl group, a methoxycarbonyl group, an acetoxyl group, an aldehyde group or a halogen atoms. c and d are each an integer of 1 to 4.) These ferrocene derivatives can be produced according to the process described in the specification of Japanese Patent Application No. 233798/1988, for instance.

Another type of ferrocene derivatives (5) are represented by the general formula:

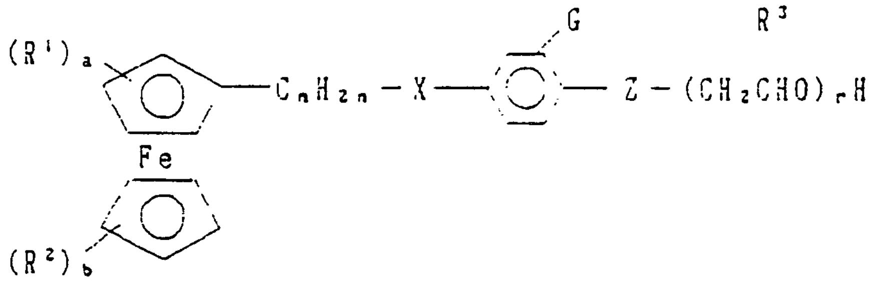

(wherein X is $-CH_2-$, -O-,
$-O\underset{\underset{O}{\|}}{C}-$, $-NH\underset{\underset{O}{\|}}{C}-$ or $-\underset{\underset{O}{\|}}{C}NH-$,
and Z indicates -O- or $-\underset{\underset{O}{\|}}{C}O-$.
G indicates a hydrogen atom, a methyl group or an ethyl group. $R^1$ and $R^2$ are each H, $NH_2$, $N(CH_3)_2$, $CH_3$, $CH_3O$, OH or a halogen atom, and $R^3$ is a hydrogen atom or a methyl group. n is an integer of 0 to 10, r is a real number of 2 to 70. a and b are each an integer of 1 to 4.) There ferrocene derivatives can be produced according to the process described in the specification of Japanese Patent Application No. 248600/1988.

Still another type of ferrocene derivatives (6) are represented by the general formula:

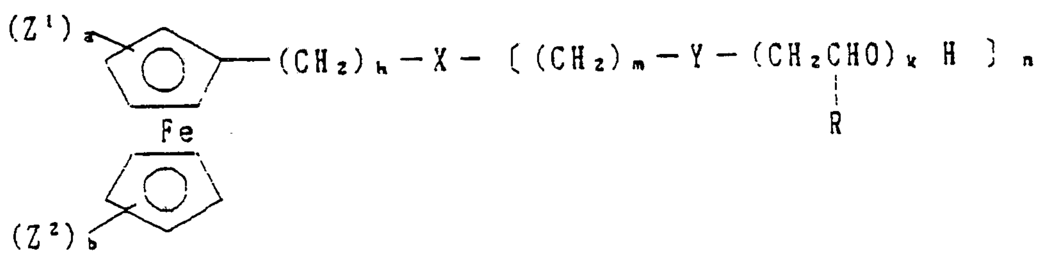

(wherein $Z^1$ and $Z^2$ are each H, $CH_3$, $CH_3O$, $NHCOCH_3$, $N(CH_3)_2$, $COCH_3$, $COOCH_3$, or a halogen atom,
X is $-NH\underset{\underset{O}{\|}}{C}-$, $-\underset{\underset{O}{\|}}{C}NH-$, -NH-,
$-NH\underset{\underset{O}{\|}}{C}NH-$, $-O\underset{\underset{O}{\|}}{C}NH-$, $-O\underset{\underset{O}{\|}}{P}<$, $-\underset{\underset{O}{\|}}{P}-$
or $-SO_r$ (r is an integer of 0 to 3),
Y is -O- or $-O\underset{\underset{O}{\|}}{C}-$,
and R is a hydrogen atom or a methyl group. k is a real number of 2 to 70, h is an integer of 2 to 18, m is an integer of 0 to 4, n indicates 1 or 2, and a and b are each an integer of 1 to 4.)

These ferrocene derivatives can be produced according to the process described in the specification of Japanese Patent Application No. 248601/1988.

In the process of the present invention, a micelle forming agent (or a surfactant) comprising the aforementioned ferrocene derivative, a supporting salt and an inorganic substance, specifically with the average particle diameter of not more than 10 µm, are introduced in an aqueous medium and thoroughly dispersed by the use of supersonic waves, a homogenizer, or a stirrer to form a micelle. Then, if necessary, excess of the inorganic substance is removed and the resulting micelle solution or dispersion thus obtained is subjected to electrolytic treatment using the electrode while allowing it to stand or somewhat stirring it. During the electrolytic treatment, the inorganic substance may be supplementarily added to the micelle solution or dispersion, or there may be provided a recycle circuit in which the micelle solution or dispersion in the vicinity of the anode is withdrawn out of the system, the inorganic substance is added to the withdrawn micelle solution or dispersion and thoroughly stirred, and then the resulting solution or dispersion is returned to the vicinity of the cathode. The concentration of the micelle forming agent can be a threshold micelle concentration or higher, specifically about 0.1 mM or higher. Electrolytic conditions are determined appropriately depending on circumstances. Usually the liquid temperature is 0 to 70° C, preferably 20 to 30° C, the voltage is 0.03 to 1.5 V, preferably 0.1 to 0.7 V, and the current density is not more than 10 $mA/cm^2$, preferably 50 to 300 $\mu A/cm^2$.

On performing this electrolytic treatment, the reaction proceeds on the theory described before. Seen from a viewpoint of the behaviour of Fe ion of the ferrocene derivative, $Fe^{2+}$ is converted into $Fe^{3+}$ on the anode, leading to break-down of the micelle, and particles (about 300 to 700 Å) of the inorganic substance are deposited on the anode. On the other hand, on the cathod, $Fe^{3+}$, oxidized on the anode is reduced to $Fe^{2+}$, recovering the original micelle and, therefore, a film forming operation can be carried out repeatedly using the same solution or dispersion.

By the electrolytic treatment as described above, a thin film made from particles, particularly 300 to 700 Å in size of the desired inorganic substance is formed on the anode.

The supporting salt (supporting electrolyte) to be used in the process of the present invention is added, if necessary, in order to control the electrical conductance of the aqueous medium. The amount of the supporting salt added is usually about 0 to 300 times and preferably about 10 to 200 times that of the above micelle forming agent. Said supporting salt is not necessarily inevitable to electrolysis. Without it, a film of high purity containing no supporting salt can be obtained. The type of the supporting salt is not critical as long as it is able to control the electric conductance for the aqueous medium without inhibiting the formation of the micelle and the deposition of the above inorganic substance.

Preferred examples of the supporting salts therein are specifically, sulfuric acid salts (salts of lithium, potassium, sodium, rubidium, aluminum and the like), acetic acid salts (salts of lithium, potassium, sodium, rubidium, beryllium, magnesium, calcium, strontium, barium, aluminum and the like), salts of halide (salts of lithium, potassium, sodium, rubidium, calcium, magnesium, aluminum and the like), salts of water soluble oxides (salts of lithium, potassium, sodium, rubidium, calcium, magnesium, aluminum and the like) which are generally and widely used as supporting salts.

The electrode to be used in the process of the present invention may be a metal more noble than the oxidation-reduction potential (against +0.15 V~+0.26 V saturated calomel electrode) of ferrocene, or an electrically conductive substance. More specifically, ITO (mixed oxide of indium oxide and tin oxide), platinum, gold, silver, glassy carbon (GC), an electrically conductive metal oxide, an electrically conductive organic polymer and the like can be used.

In the process of the present invention, the inorganic substance as the starting material for inorganic thin films is not critical for its particle diameter, but specifically not more than 10 µm in average diameter of the particle, and most specifically in the form of fine grain of not more than 1 µm in average diameter. Herein, with the use of particles of more than 10 µm in average diameter, the resulting inorganic thin film can not always become smooth and uniform, and be sometimes involved in various disadvantages in that it takes much time to be made soluble with the use of micelle forming agent and that inorganic substances in a large amount may remain undissolved under some conditions.

Various inorganic substances such as inorganic oxides and inorganic sulfides can be used in the process of the present invention. Examples of such inorganic substances are $TiO_2$, C, CdS, $Fe_2O_3$, $Y_2O_3$-$ZrO_2$, $ZrO_2$, $Al_2O_3$, CuS, ZnS, $TeO_2$, $LiNbO_3$, $Si_3N_4$, $SrCeO_3$, $WO_3$, PLZT and various kinds of superconductive oxides.

According to the process of the present invention, inorganic thin films extraordinary small in thickness, comprising various inorganic substances, can be efficiently formed with the use of a simple device and a simple operation.

The inorganic thin films obtained by the process of the present invention can be utilized widely and effectively as electronic material, displaying materials, luminescent display materials, liquid crystal display color filters, liquid crystal projection color filters, aurora vision color filters, various color filters, plasma

displays, coating materials, electrochromic materials, electroluminescenece materials, optical memory materials, optical disk materials, light sensor materials, solar batteries and the like.

The present invention will be explained in more detail with reference to Examples and Comparative Examples.

Example 1

To 100 ml of water, 0.198 g of a compound (FPEG) represented by the formula:

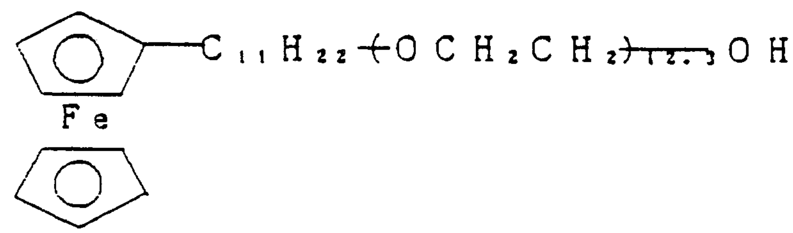

was added, and 0.232 g of $WO_3$ having the average particle diameter of 0.8 $\mu$m was added thereto and stirred by use of supersonic waves for 10 minutes. The micelle solution or dispersion thus obtained was subjected to centrifugal separation at 2,000 rpm for 10 minutes. Then 20 cc of the supernatant of the resulting solution or dispersion was taken, and 0.208 g of lithium bromide was added thereto to make an electrolyte.

Using ITO as the anode, platinum as the cathode, and a saturated calomel electrode as a reference electrode, controlled potential electyrolysis was carried out at 25° C at the applied voltage of 0.5 V and with an electric current density of 15 $\mu A/cm^2$ for 30 minutes. The amount of electricity that passed therethrough at that period was 0.027 coulomb.

As the result, a thin film of $WO_3$ was obtained. Since the X-ray diffraction peak of $WO_3$ as the starting material (Fig. 1) and the X-ray diffraction peak of the resulting thin film (Fig. 2) agreed, it was confirmed that the thin film on ITO was $WO_3$.

Example 2

To 100 ml of water, 0.109 g of a ferrocene derivative (FTMA) represented by the formula:

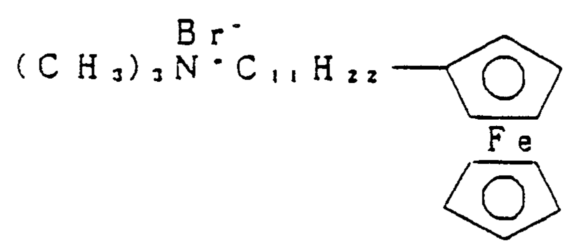

as micelle forming agent was added, and 0.20 g of $TiO_2$ having average particle diameter of 1.2 $\mu$m was added thereto, and stirred with the use of supersonic waves for 10 minutes. The resulting micelle solution or dispersion was subjected to centrifugal separation at 2,000 rpm for 10 minutes. Then 20 cc of the supernatant of the resulted solution or dispersion was taken, and 0.208 g of lithium bromide was added thereto to make an electrolyte.

Using GC as the anode, platinum as the cathode, and a saturated calomel electrode as a reference electrode, controlled potential electrolysis was carried out at 25° C at the applied voltage of 0.5 V with an electyric current density of the 27 $\mu A/cm^2$ for 30 minutes. The amount of electricity that passed therethrough at that period was 0.041 coulomb.

As the result, a thin film of $TiO_2$ was obtained. Since the X-ray diffraction peak of $TiO_2$ as the starting material (Fig. 3) and the X-ray diffraction peak of the thin film obtained (Fig. 4) agreed, it was confirmed that

the thin film on GC was $TiO_2$.

Example 3

To 100 cc of water, 0.130 g of a ferrocene derivative (FPYA) represented by the formula:

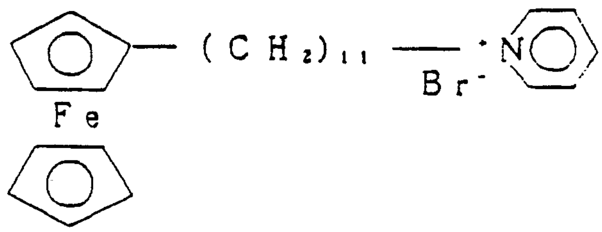

as micelle forming agent was added, and 0.20 g of 8 mol% $Y_2O_3$-$ZrO_2$ having an average particle diameter of 1.8 µm was added thereto, and stirred with supersonic waves for 10 minutes. The micelle solution or dispersion thus obtained was subjected to centrifugal separation at 2,000 rpm for 10 minutes. Then 20 cc of the supernatant of the resulting solution or dispersion was taken, and 0.208 g of lithium bromide was added thereto to make an electrolyte.

Using ITO as the anode, platinum as the cathode, and a saturated calomel electrode as a reference electrode, controlled potential electrolysis was carried out at 25°C at an applied voltage of 0.5 V with an electric current density of 12 µA/$cm^2$ for 30 minutes. The amount of electricity that passed therethrough at that period was 0.03 coulomb.

As the result, a thin film of $Y_2O_3$-$ZrO_2$ was obtained. Since the X-ray diffraction peak of $Y_2O_3$-$ZrO_2$ (Fig. 5) and the X-ray diffraction peak of the resulting thin film (Fig. 6) agreed, the thin film on platinum was confirmed to be $Y_2O_3$-$ZrO_2$.

Example 4

To 100 cc of water, 0.198 g of FPEG as micelle forming agent was added, and 0.2 g of CdS having an average particle diameter of 0.09 µm was added thereto, and the resulting mixture was stirred with supersonic waves for 10 minutes. The micelle solution or dispersion thus obtained was subjected to centrifugal separation at 2,000 rpm for 10 minutes. Then 20 cc of the supernatant of the resulting solution or dispersion was taken, and 0.208 g of lithium bromide was added thereto to make an electrolyte.

Using ITO as the anode, platinum as the cathode, and a saturated calomel electrode as a reference electrode, controlle potential electrolysis was carried out at 25°C at an applied voltage of 0.5 V with an electric current density of 19 µA/$cm^2$ for 30 minutes. The amount of electricity that passed therethrough was 0.03 coulomb.

As the result, a thin film of CdS was obtained. Since the X-ray diffraction peak of CdS as starting material (Fig. 7) and the X-ray diffraction peak of the resulting thin film (Fig. 8) agreed, the thin film on ITO was confirmed to be CdS.

Example 5

To 100 cc of water, 0.130 g of a ferrocene derivative (FTMA) represented by the formula:

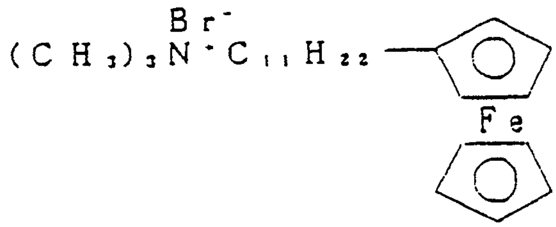

as micelle forming agent was added, and 0.2 g of $\alpha$-$Al_2O_3$ having an average particle diameter of 0.2 $\mu$m was added thereto, and the resulting mixture was stirred with the use of supersonic waves for 10 minutes. The micelle solution or dispersion thus obtained were subjected to centrifugal separation at 2,000 rpm for 10 minutes. Then 20 cc of the supernatant was taken, and 0.208 g of lithium bromide was added thereto to make an electrolyte.

Using ITO as the anode, platinum as the cathode, and a saturated calomel electrode as a reference electrode, controlled potential electrolysis was carried out at 25°C at an applied voltage of 0.5 V with an electric current density of 21 $\mu A/cm^2$ for 30 minutes. The amount of electricity that passed therethrough was 0.031 coulomb.

As the result, a thin film of $\alpha$-$Al_2O_3$ was obtained. Since the X-ray diffraction peak of $\alpha$-$Al_2O_3$ as the starting material (Fig. 9) and the X-ray diffraction peak of the thin film obtained (Fig. 10) agreed, the thin film on ITO was confirmed to be $\alpha$-$Al_2O_3$

Example 6

To 100 cc of water, 0.2 g of FPEG as micelle forming agent was added, and 0.3 g of $SrCeO_3$ having an average particle diameter of 0.31 $\mu$m was added thereto, and stirred with the supersonic waves for 10 minutes. The resulting micelle solution or dispersion was subjected to centrifugal separation at 2,000 rpm for 10 minutes. Then 20 cc of the supernatant was taken, and 0.208 g of lithium bromide was added thereto to make an electrolyte.

Using ITO as the anode, platinum as the cathode, and a saturated calomel electrode as a reference electrode, controlled potential electrolysis was carried out at 25°C at an applied voltage of 0.5 V withan electric current density of 26 $\mu A/cm^2$ for 30 minutes. The amount of electricity that passed therethrough was 0.04 coulomb.

As the result, a thin film of $SrCeO_3$ was obtained. Since the X-ray diffraction peak of $SrCeO_3$ as the starting material (Fig.11) and the X-ray diffraction peak of the thin film obtained (Fig. 12) agreed, the thin film on ITO was confirmed to be $SrCeO_3$.

## Claims

1. A process for producing inorganic thin films which comprises dissolving or dispersing inorganic substances in an aqueous medium by the use of a micelle forming agent or a surfactant comprising a ferrocene derivative, and then electrolyzing the resulting micelle solution or dispersion to form a thin film of said inorganic substance on the electrode.

2. The process according to Claim 1, wherein the inorganic substance has an average particle diameter of not more than 10 $\mu$m.

3. The process according to Claim 1, wherein the inorganic substance is $TiO_2$, C, CdS, $Fe_2O_3$, $Y_2O_3$-$ZrO_2$, $ZrO_2$, $Al_2O_3$, CuS, ZnS, $TeO_2$, $LiNbO_3$, $Si_3N_4$, $SrCeO_3$, $WO_3$ or PLZT.

4. The process according to Claim 1, wherein the ferrocene derivative is represented by the general formula:

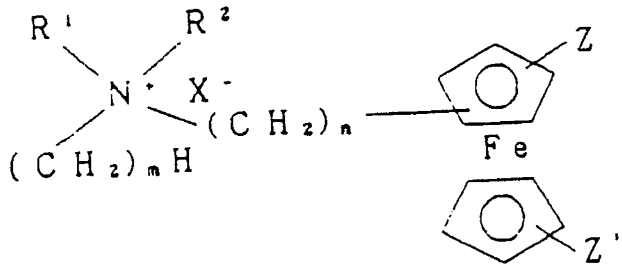

(wherein $R^1$ and $R^2$ are each a hydrogen or an alkyl group having 1 to 4 carbon atoms (provided that the number of carbon atoms does not exceed the integer m described later), Z and Z′ are each a hydrogen, a methyl group, an ethyl group, a methoxyl group or a carbomethoxyl group, X is a halogen, and m and n are integers satisfying the requirements: $m \geq 0$, $n \geq 0$, and $4 \leq m+n \leq 16$), the general formula:

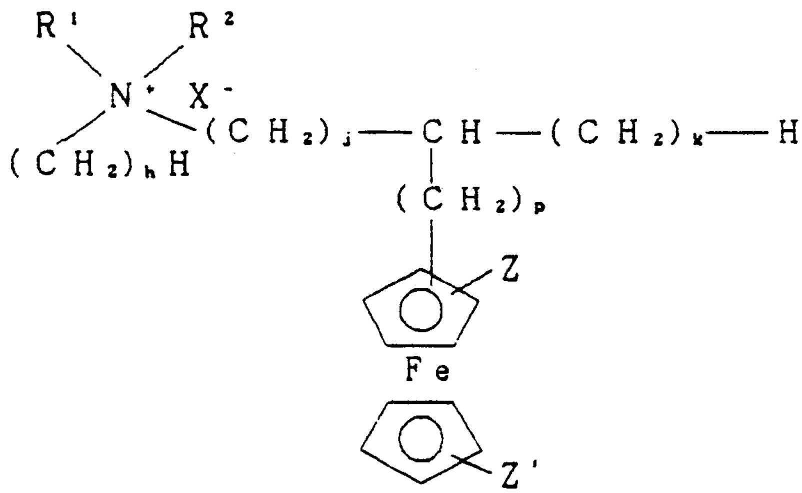

(wherein $R^1$, $R^2$, X, Z and Z′ are as defined above (provided that the number of carbon atoms of $R^1$ and $R^2$ does not exceed the integer h described later), h, j and k are integers satisfying the requirements: $h \geq 0$, $j \geq 0$, $k \geq 1$ and $3 \leq h+j+k \leq 15$, and p is an integer satisfying the requirement: $0 \leq p \leq k-1$), the general formula:

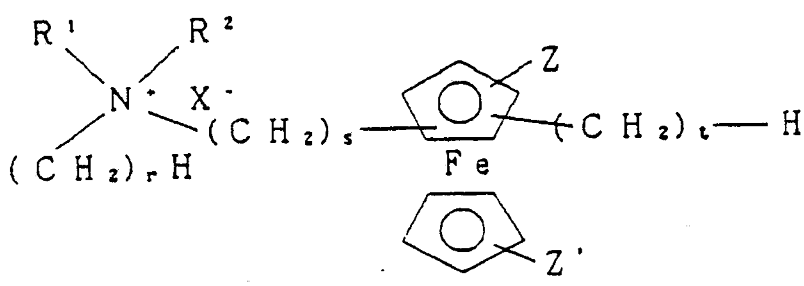

(wherein $R^1$, $R^2$, X, Y, Z and Z′ are as defined above (provided that the number of carbon atoms of $R^1$ and $R^2$ does not exceed the integer r described later), and r,s and t are integers satisfying the requirements: $r \geq 0$, $s \geq 0$, $t \geq 1$ and $4 \leq r+s+t \leq 16$),
or the general formula:

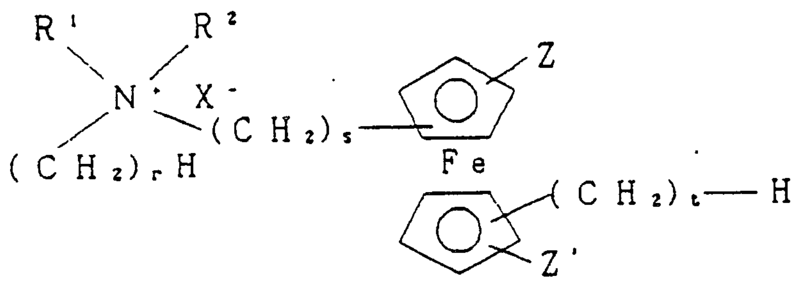

(wherein $R^1$, $R^2$, X, Y, Z, Z′, r, s and t are as defined above.)

5. The process according to Claim 1, wherein the ferrocene derivative is represented by the general formula:

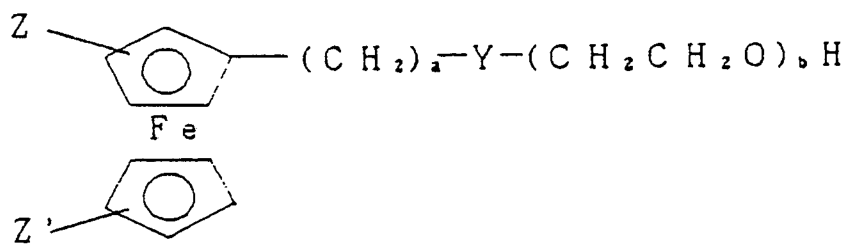

(wherein a is an integer of 2 to 18, b is a real number of 2.0 to 100.0, Y is an oxygen, an oxycarbonyl group or a carboxyl group, and Z and Z′ are as defined above.)

6. The process according to Claim 1, wherein the ferrocene derivative is represented by the general formula:

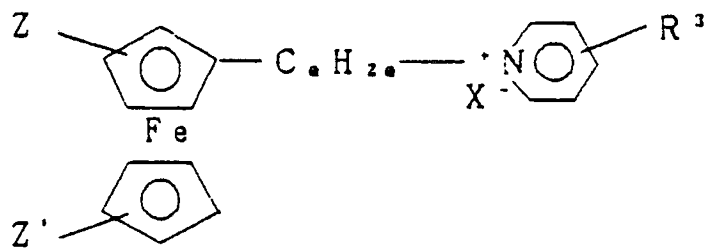

(wherein Z, Z′ and X are as defined above, $R^3$ indicates an alkyl group having 1 to 4 carbon atoms, an alkoxyl group having 1 to 4 carbon atoms, a carboalkoxyl group having 1 to 5 carbon atoms, a hydroxyl group, a carboxyl group or a sulfonic acid group, and $c_eH_{2e}$ indicates a straight chain or a branched chain alkylene group having 1 to 16 carbon atoms.)

7. The process according to Claim 1, wherein the ferrocene derivative is represented by the general formula:

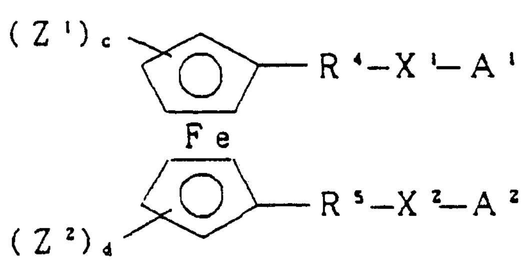

(wherein $R^4$ and $R^5$ are each a straight chain or a branched chain alkylene group having 1 to 14 carbon atoms, and $X^1$ and $X^2$ are each -O- or $-\underset{\underset{O}{\|}}{C}-O-$,

$A^1$ and $A^2$ are each

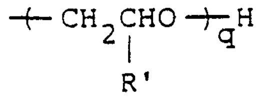

(R′ is a hydrogen atom or a methyl group, and q is a real number of 2 to 70), $Z^1$ and $Z^2$ are a hydrogen atom, a methyl group, a methoxyl group, an amino group, a dimethylamino group, a hydroxyl group, an acetylamino group, a carboxyl group, a methoxycarbonyl group, an acetoxyl group, an aldehyde group or a halogen atom, and c and d are each an integer of 1 to 4.)

8. The process according to Claim 1, wherein the ferrocene derivative is represented by the general formula:

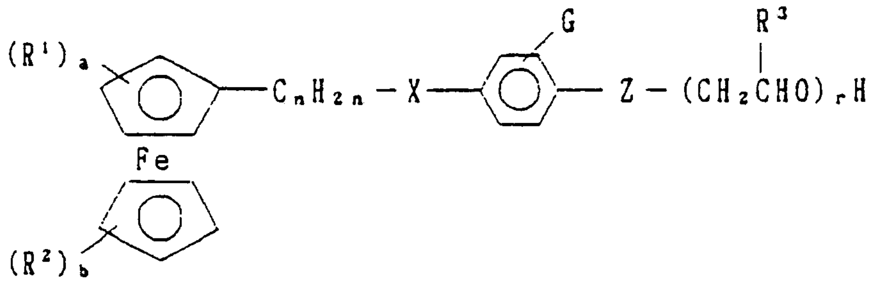

(wherein X is $-CH_2-$, -O-, $-O\underset{\underset{O}{\|}}{C}-$, $-NH\underset{\underset{O}{\|}}{C}-$ or $-\underset{\underset{O}{\|}}{C}NH-$, and Z indicates -O- or $-\underset{\underset{O}{\|}}{C}O-$, G indicates a hydrogen atom, a methyl group or an ethyl group, $R^1$ and $R^2$ are each H, $NH_2$, $N(CH_3)_2$, $CH_3$, $CH_3O$, OH or a halogen atom, $R^3$ is a hydrogen atom or a methyl group, n is an integer of 0 to 10, r is a real number of 2 to 70 and a and b are each an integer of 1 to 4.)

9. The process according to Claim 1, wherein the ferrocene derivative is represented by the general formula:

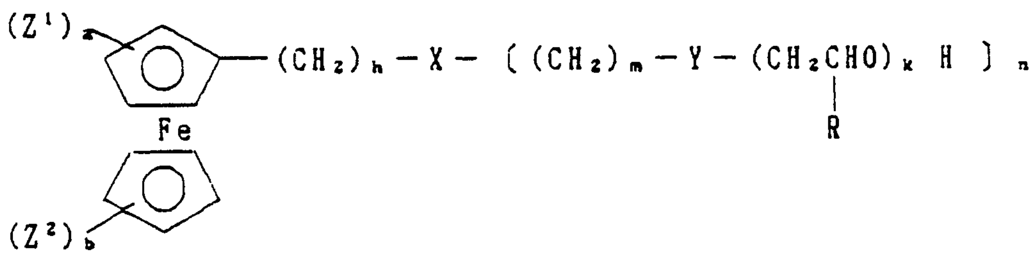

(wherein $Z^1$ and $Z^2$ are each H, $CH_3$, $CH_3O$, $NHCOCH_3$, $N(CH_3)_2$, $COCH_3$, $COOCH_3$, or a halogen atom, X is $-NH\underset{\underset{O}{\|}}{C}-$, $-\underset{\underset{O}{\|}}{C}NH-$, -NH-, $-NH\underset{\underset{O}{\|}}{C}NH-$, $-O\underset{\underset{O}{\|}}{C}NH-$, $-O\underset{\underset{O}{\|}}{P}<$, $-\underset{\underset{O}{\|}}{P}-$ or $-SO_r$ (r is an integer of 0 to 3), Y is -O- or $-O\underset{\underset{O}{\|}}{C}-$, and R is a hydrogen atom or a methyl group, k is a real number of 2 to 70, h is an integer of 2 to 18, m is an integer of 0 to 4, n indicates 1 or 2, and a and b are each an integer of 1 to 4.)

10. The process according to Claim 1, wherein the electrolysis is carried out under a condition of a temperature of 0 to 70 °C, a voltage of 0.03 to 1.5 V and a current density of not more than 10 $mA/cm^2$.

FIG. 1

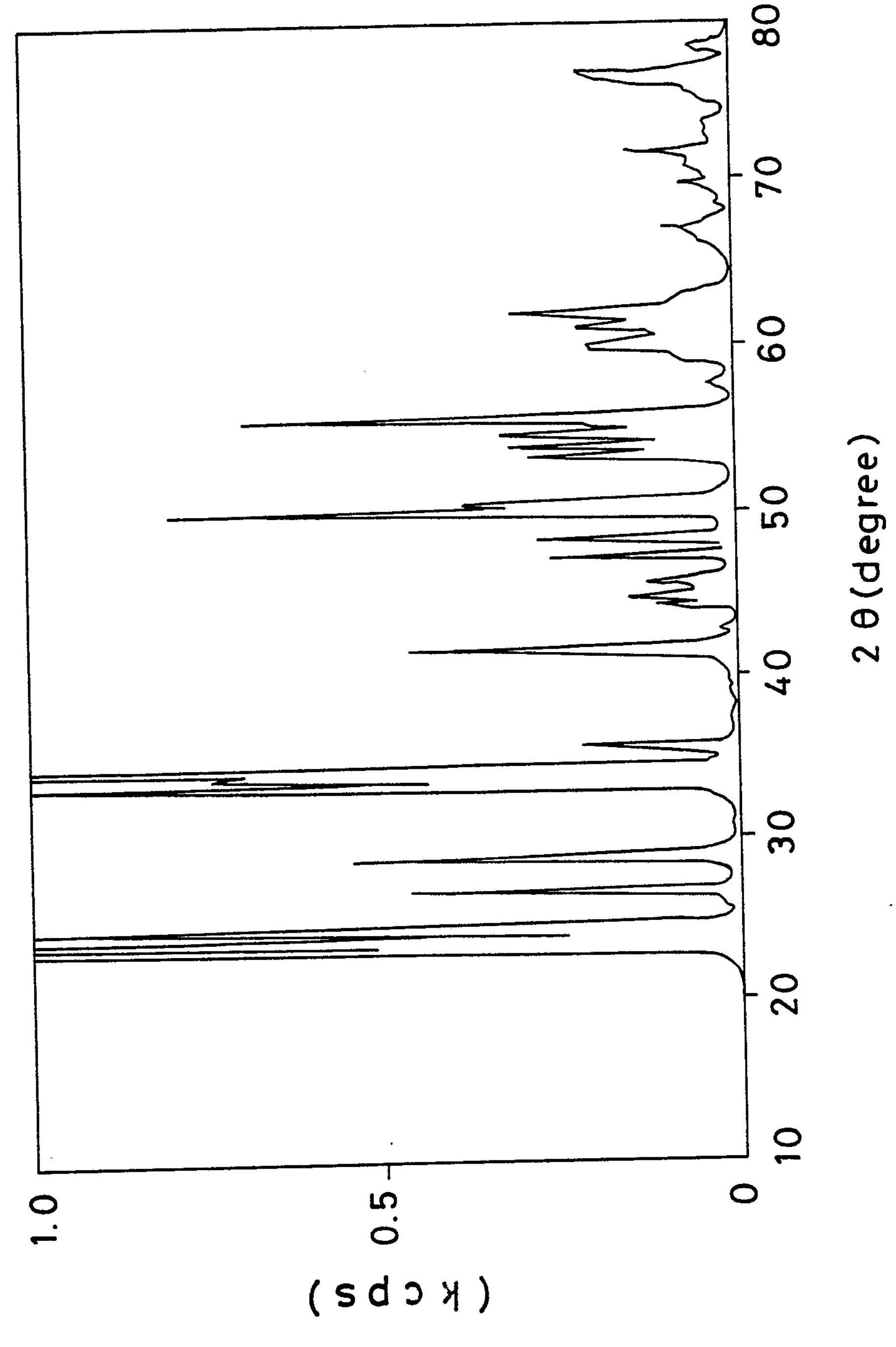

FIG. 2

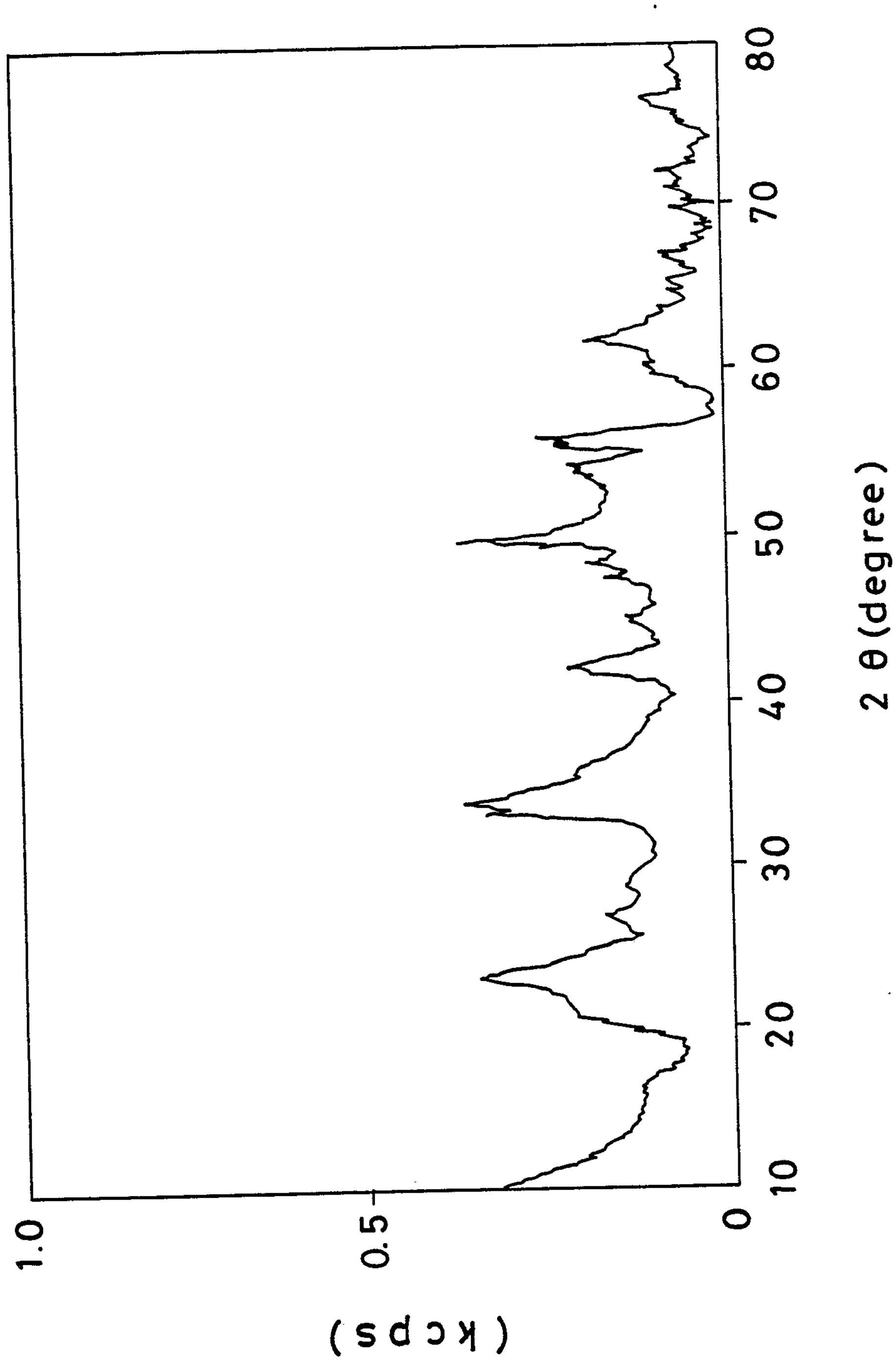

FIG. 3

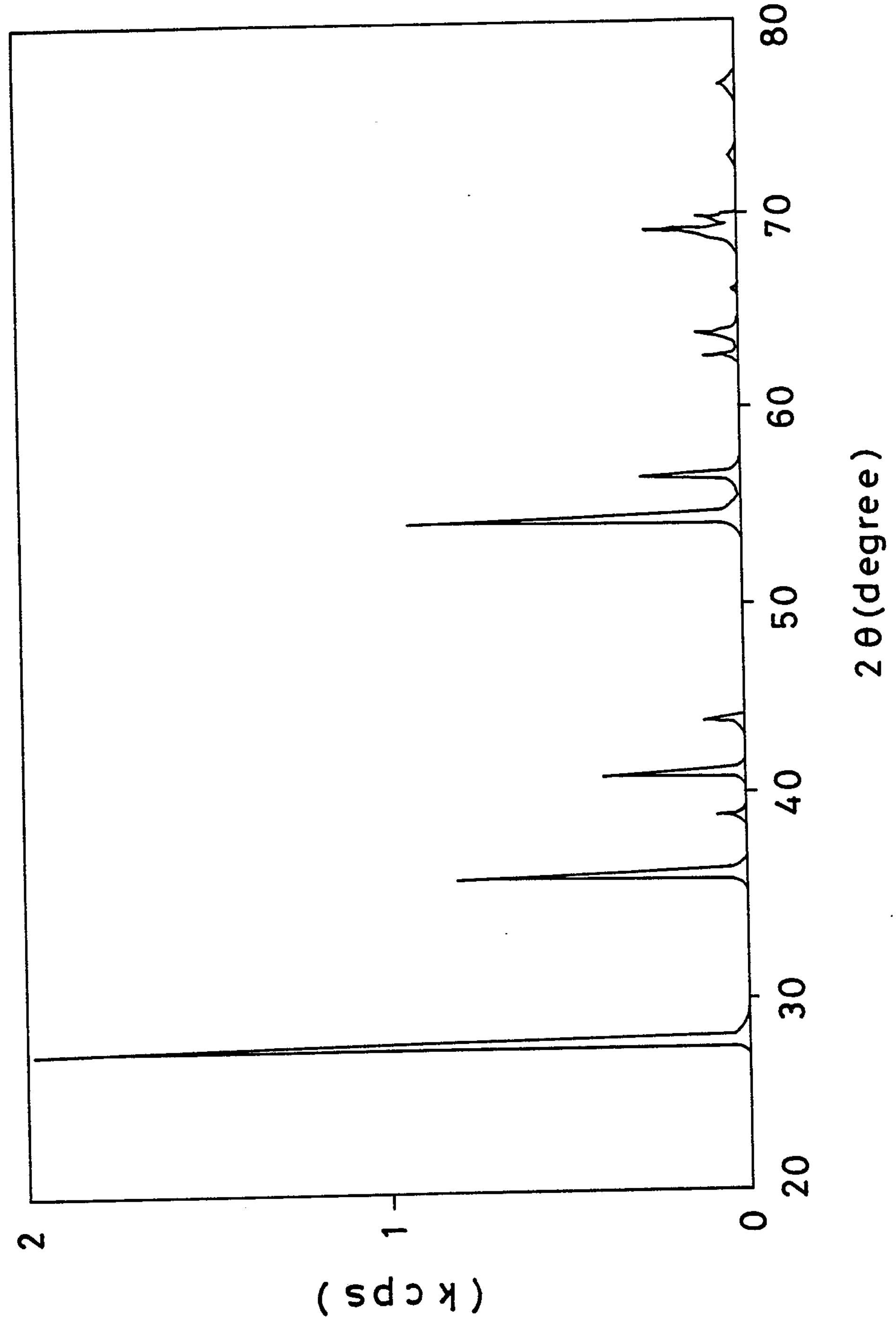

FIG. 4

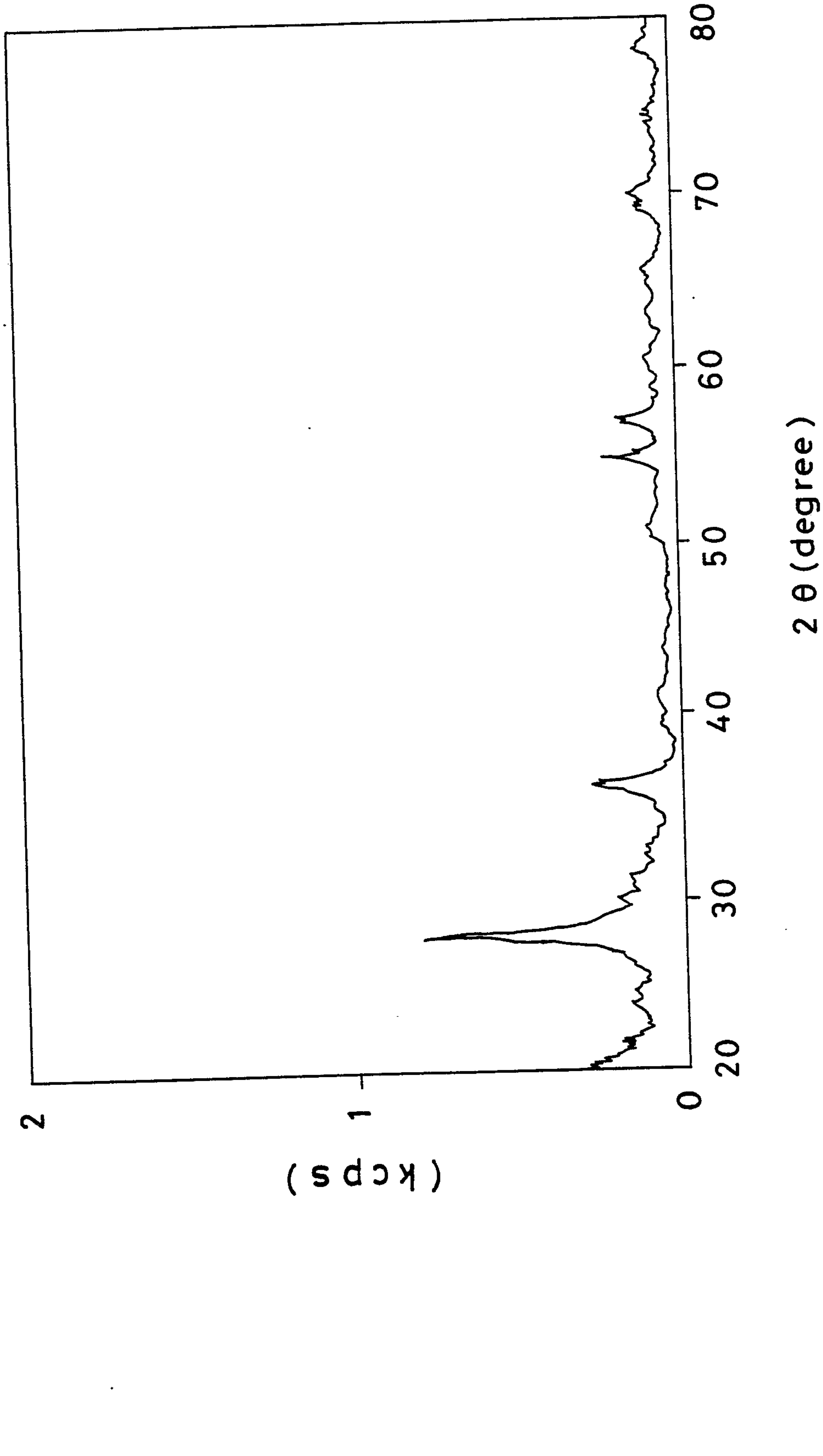

FIG. 5

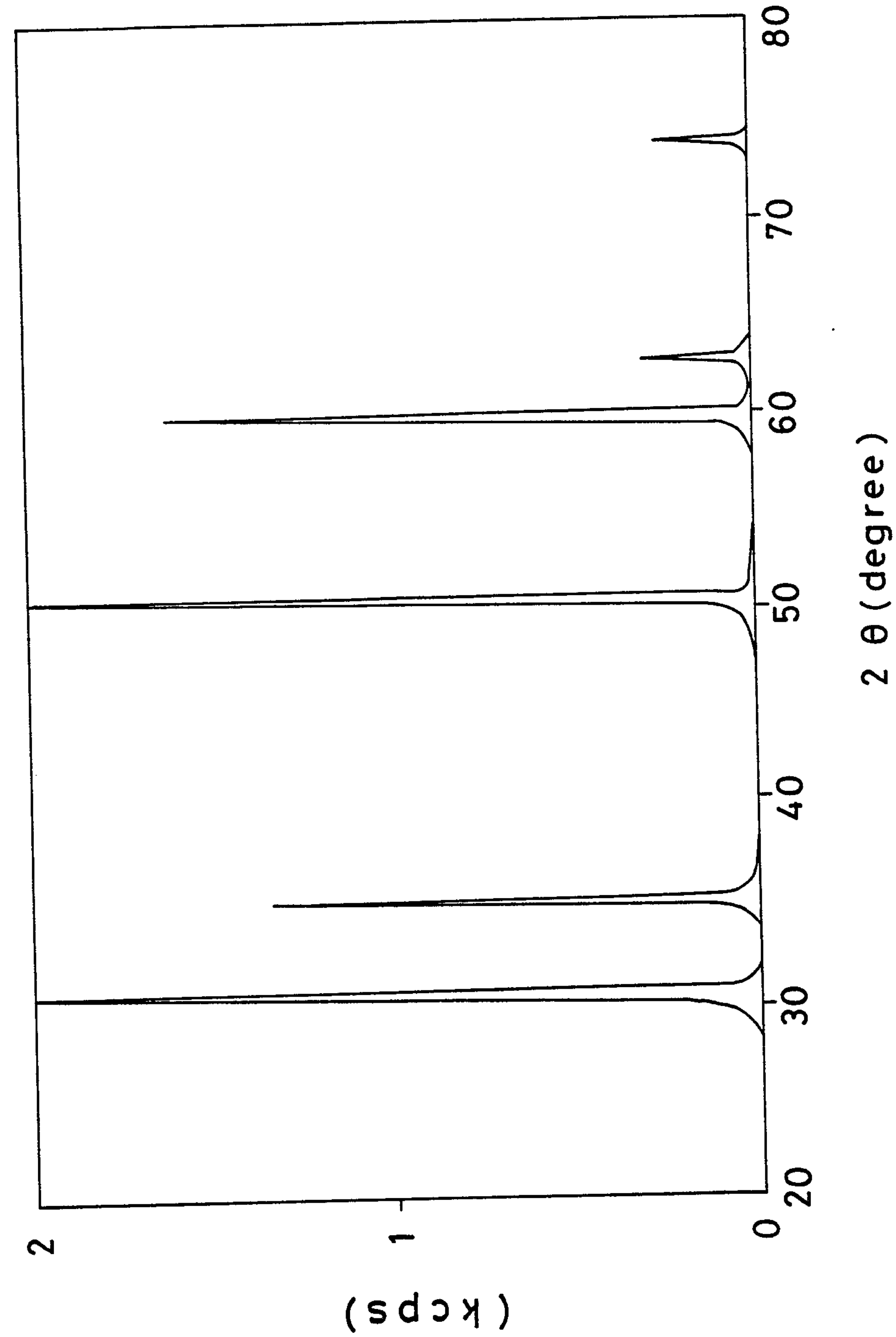

FIG.6

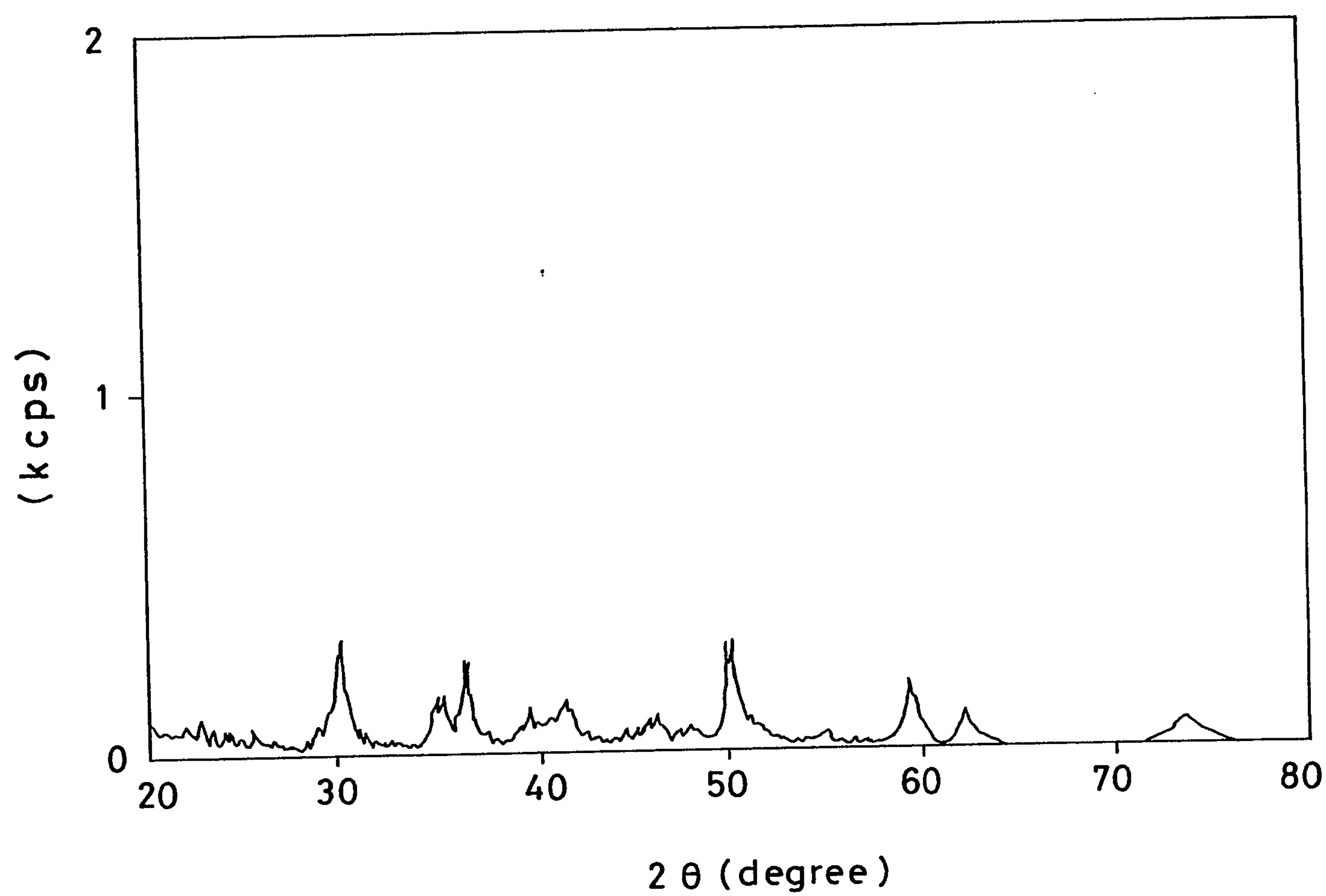

FIG.7

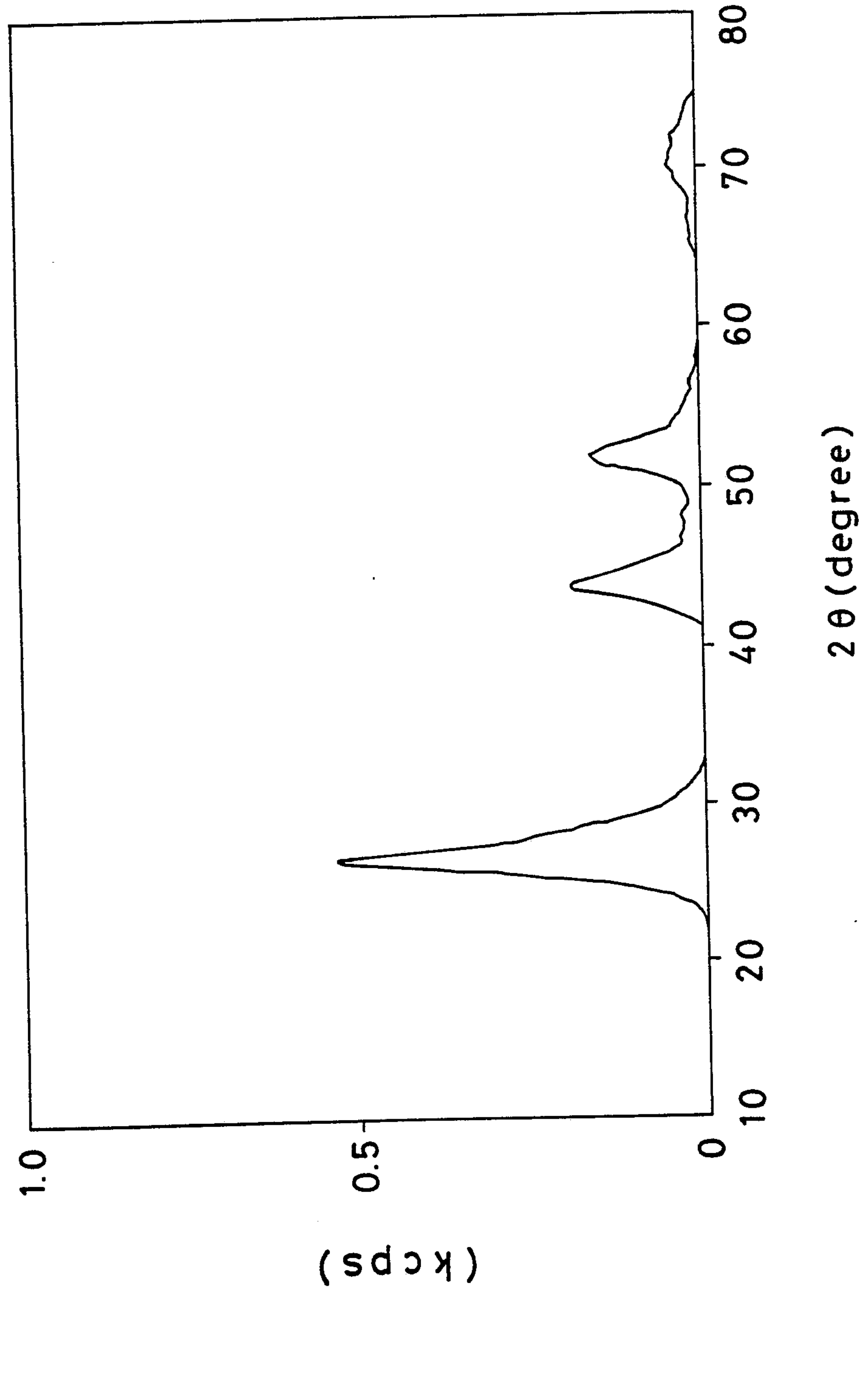

FIG. 8

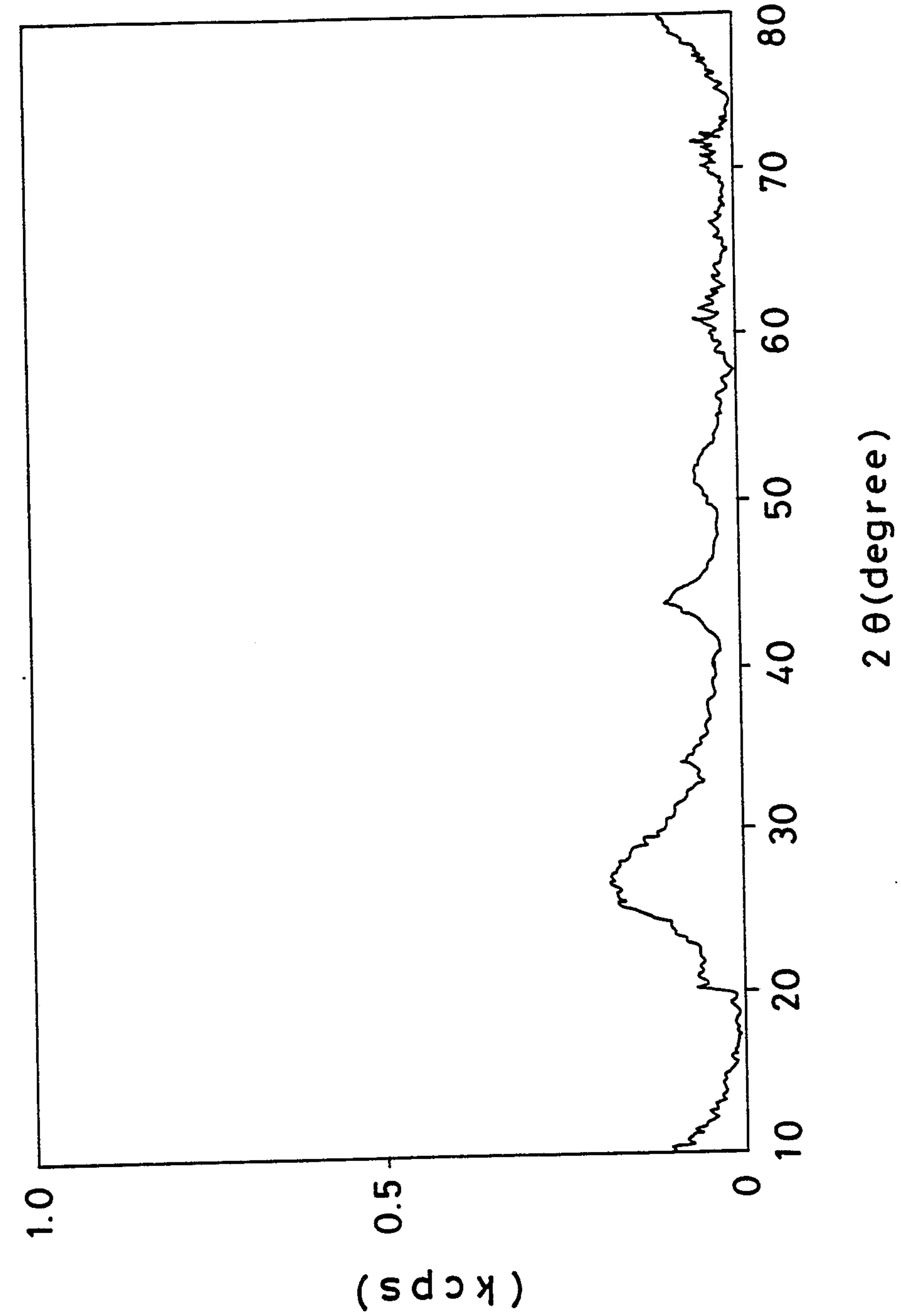

FIG. 9

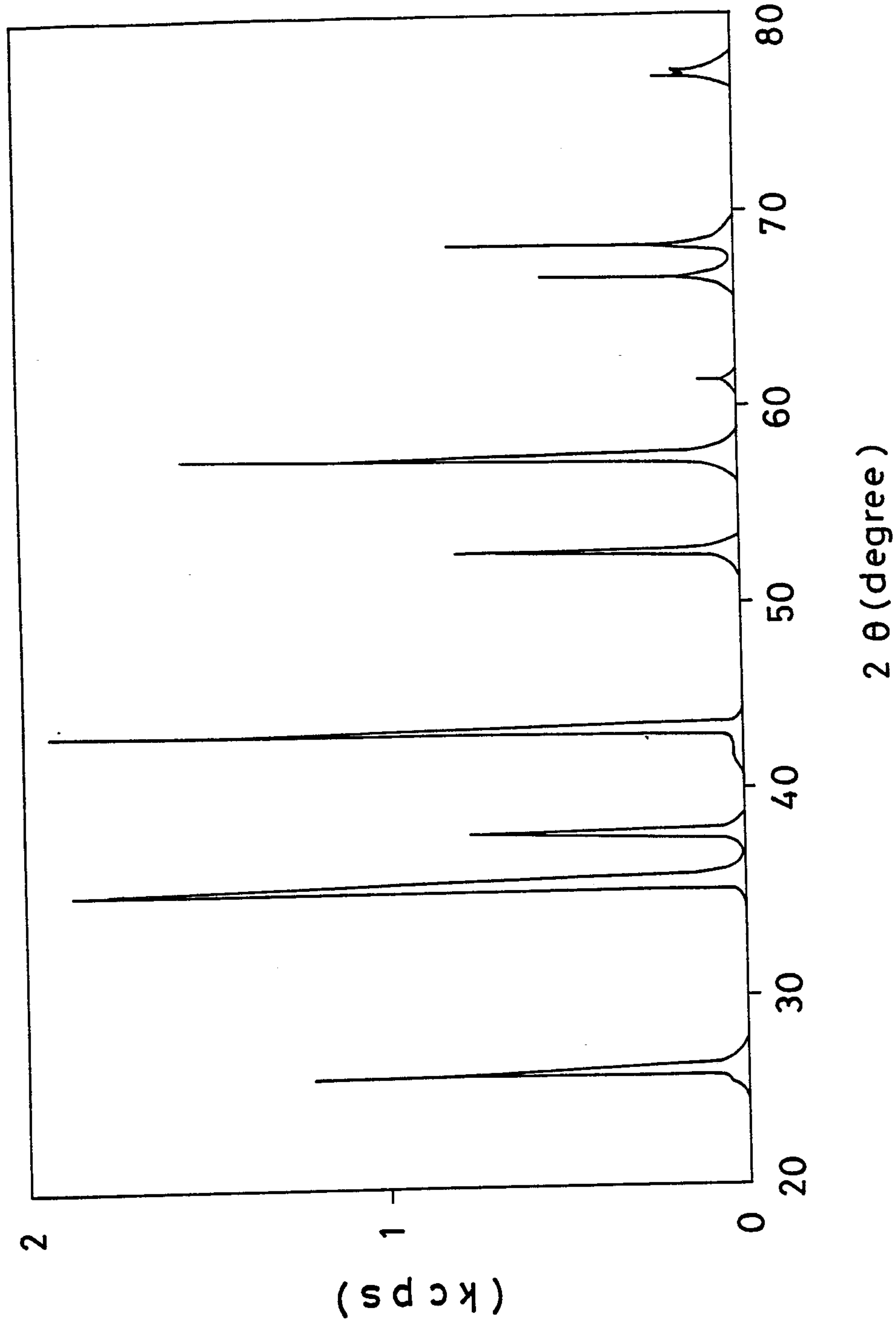

FIG. 10

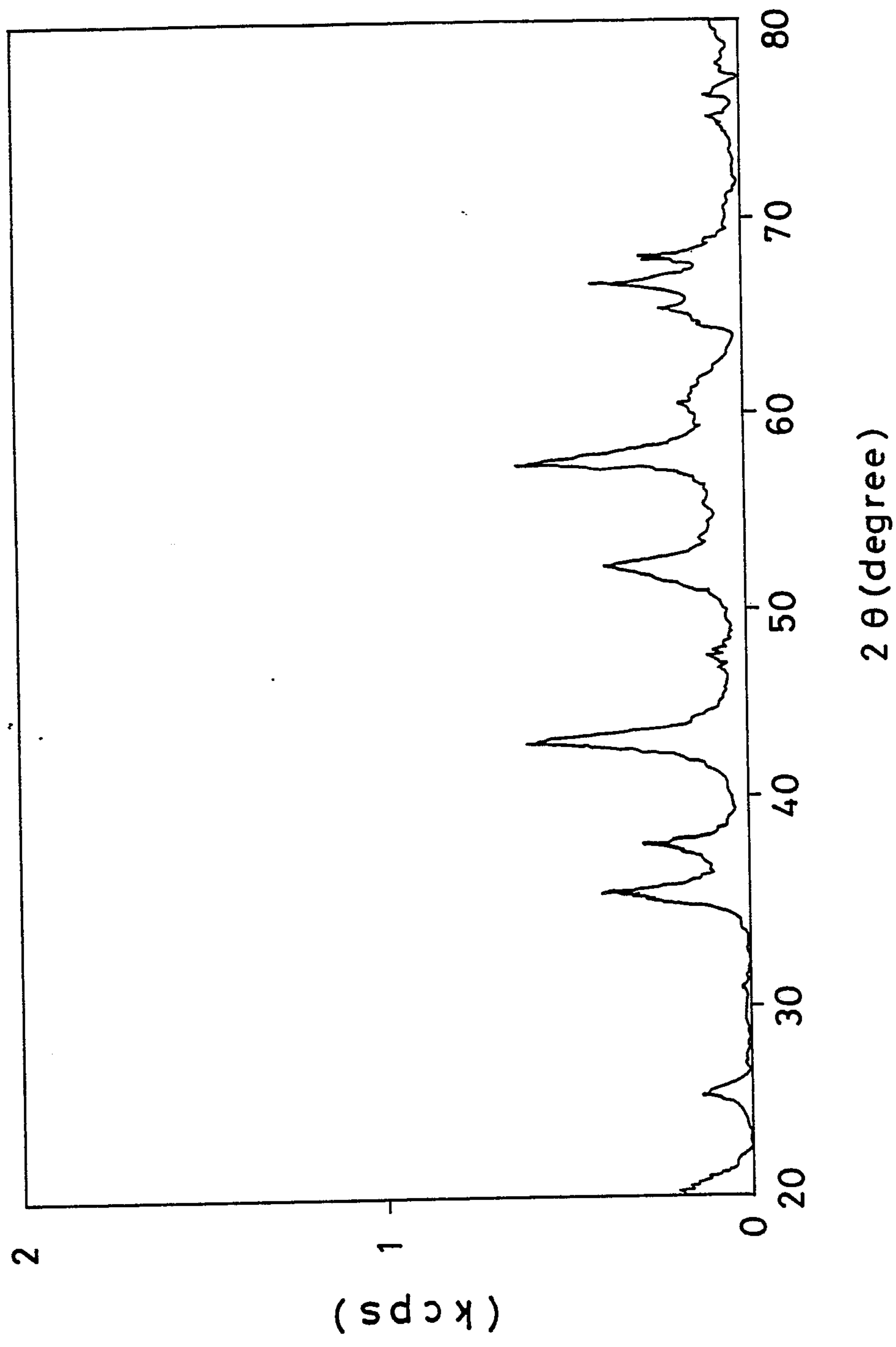

FIG.11

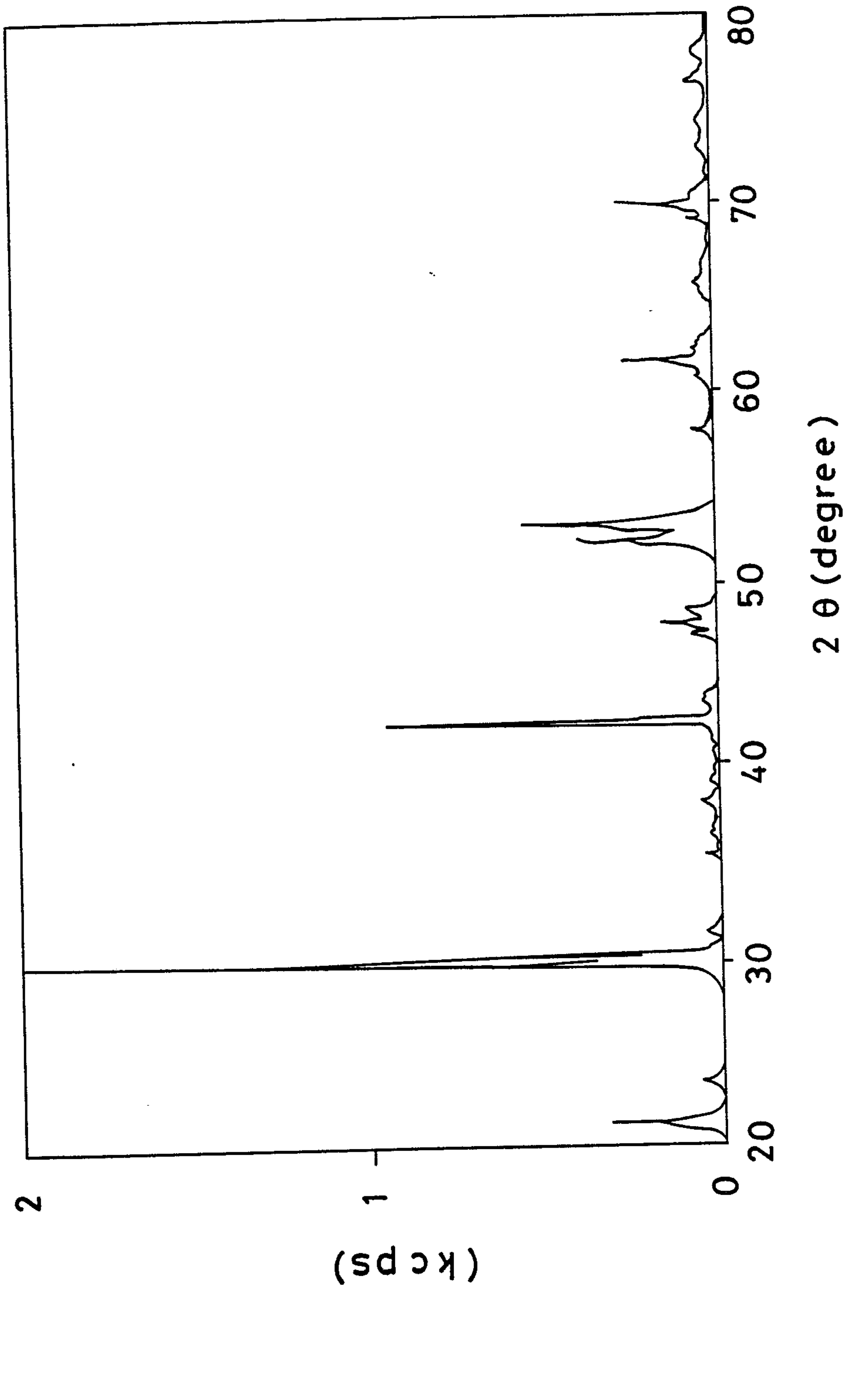

FIG. 12

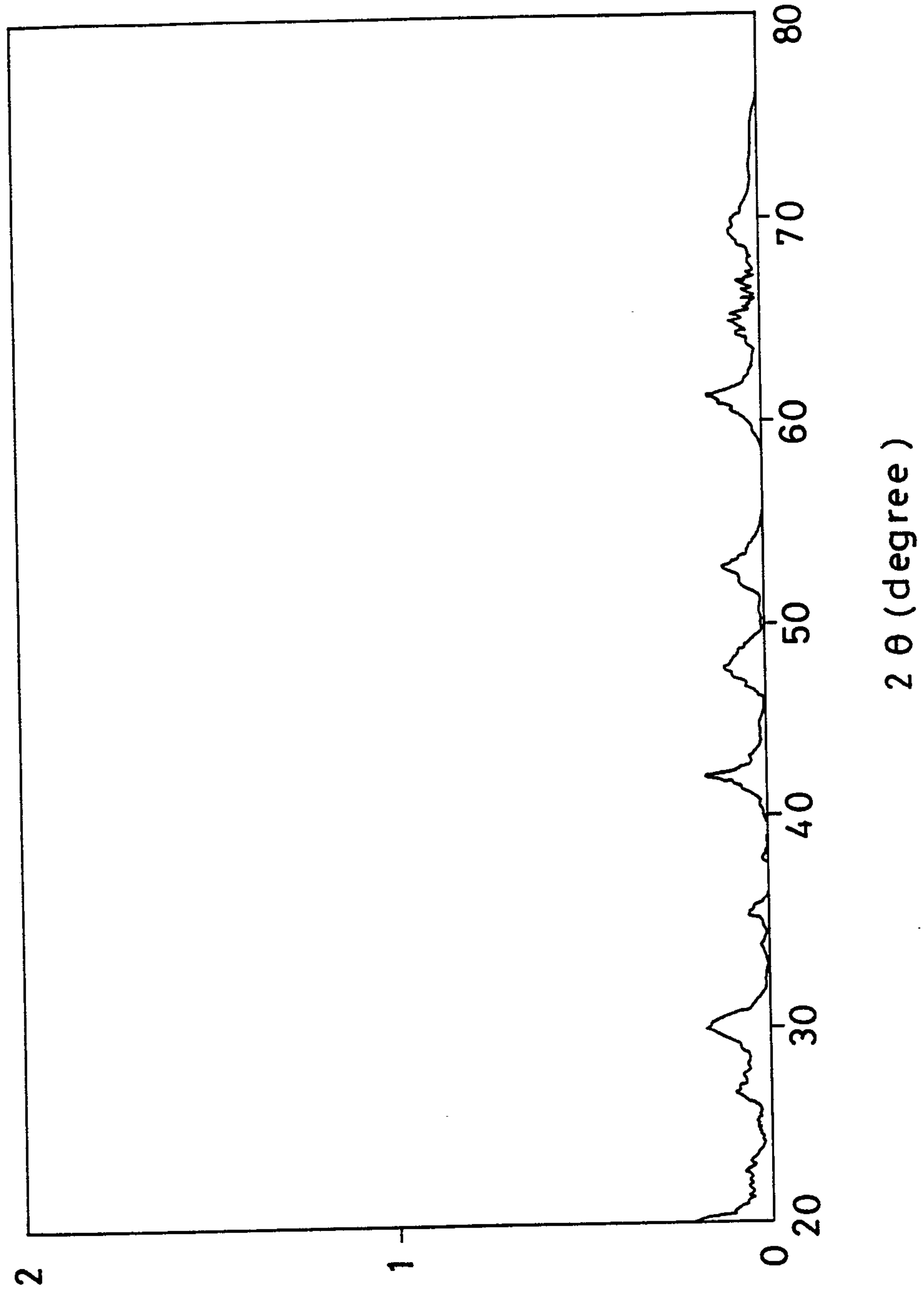

European Patent Office

# EUROPEAN SEARCH REPORT

Application number

EP 89120564.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO - A1 - 88/07 538 (IDEMITSU KOSAN COMPANY LIMITED) * Abstract * -- | 1 | C 25 D 13/02<br>C 25 D 13/10<br>C 25 D 9/04<br>B 01 F 17/00<br>B 01 F 17/18 |
| X | DD - A1 - 234 274 (AKADEMIE DER WISSENSCHAFTEN DER DDR et al.) * Claims * ---- | 1 | C 07 F 17/02 |

| TECHNICAL FIELDS SEARCHED (Int. Cl.5) |
|---|
| C 25 D<br>B 01 F<br>C 07 F |

The present search report has been drawn up for all claims

| Place of search | Date of completion of the search | Examiner |
|---|---|---|
| VIENNA | 20-12-1989 | PAMMINGER |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document